# EUROPEAN PATENT SPECIFICATION

(11) **EP 1 973 715 B1**
(45) Date of publication and mention of the grant of the patent: **26.09.2018**
(21) Application number: 07709764.0
(22) Date of filing: 12.01.2007
(51) Int. Cl.: B28D 1/04, B23D 47/12, F16H 3/30

(54) **MULTI-SPEED CONCRETE SAW**
BETONSÄGE MIT MEHREREN DREHZAHLEN
SCIE A BETON MULTI VITESSE

(30) Priority: 16.01.2006 US 331725
(43) Date of publication of application: 01.10.2008
(73) Proprietor: Husqvarna AB, 561 82 Huskvarna (SE)
(72) Inventor: MEISTER, Donald, Olathe, KS 66061 (US)
(86) International application number: PCT/US2007/000848
(87) International publication number: WO 2007/082065

(56) References cited:
- WO-A1-2006/004889
- US-A- 1 751 770
- US-A- 4 096 932
- US-A- 5 810 448
- US-A- 5 810 448
- US-A1- 2006 000 464

## Description

### BACKGROUND

### Field

These inventions relate to a concrete saw as per the preamble of claim 1. An example of such a concrete saw is disclosed by US 5 810 448 A.

### Related Art

In the concrete industry, large slabs of concrete are used to form road beds, building floors and other structures used for its strength and durability. Seams, grooves or other cuts in the concrete may be made in the slabs to form expansion joints, control stress cracks as the slabs cure or to form channels or openings in the slabs to accept other structures. Concrete saws are used to cut the seams, grooves or other openings, and such concrete saws are often very heavy and difficult to move along the concrete slab.

For large or heavy construction applications, heavy self-propelled saws or other large concrete saws are used. Examples of concrete saws and their construction and operation can be found in a number of patents, including U.S. patent No. 5,809,985, entitled "Self-Propelled Saw," U.S. patent No. 5,743,247, entitled "Method and Apparatus for Safe Operation of Self-Propelled Concrete Saw," U.S. Pat No. 5,680,854, entitled "Self-Propelled Saw," U.S. Pat No. 5,477,844, entitled "Slurry Recovery System for a Wet Cutting Saw," and U.S. Pat No. 4,664,645 entitled "Blade Drive Shaft Assembly". During setup and operation of the saw, an operator walks behind the saw to control the direction, cutting speed, cutting depth and other operating conditions under which the saw operates. The saw includes one or more wheels allowing the saw to move along the concrete and a frame supported by the wheels on which is mounted a motor or other power supply for operating a saw blade and often for driving one or more wheels to move the saw along the concrete surface. One or more handles extend behind the saw about the level of an operator's hands to allow the operator to manually position the saw. Typically, the saw blade is in the front of the saw and handles extend behind the saw.

For a typical straight cut, the operator aligns the saw blade and often a cutting guide with the intended cutting path. The saw is maneuvered with the saw blade raised above the concrete until the blade and cutting guide are aligned with the cutting path. As the saw blade engages the concrete or other surface to be cut, the blade cuts into the concrete to the desired depth, such as the depth selected by the operator. At the desired depth, the drive wheels are engaged to propel the saw forward to cut the desired slot or groove, which typically follows a straight cut path.

For some saws, such as the self-propelled saws, a number of different sizes of blades can be used on the saw. However, because different sizes of blades have optimum operating conditions, such as optimum blade speeds, it is desirable to operate one blade under one operating configuration, such as at one speed, and a different sized blade under another operating configuration, such as at another speed. Different operating configurations can be carried out by running the saw motor at different speeds, changing the motor output and blade input pulleys to produce different ratios, or in other ways. Saws having gearboxes that can operate at multiple speeds can make easier to change the operating configuration when changing from one blade size to another.

### SUMMARY

The present invention provides a concrete saw having the features of claim 1. Additional optional features are defined by the dependent claims.

These and other examples are set forth more fully below in conjunction with drawings, a brief description of which follows.

### BRIEF DESCRIPTION OF THE DRAWINGS

FIG. 1 is an upper right isometric view of a concrete saw for use with the present inventions.
FIG. 2 is a right side elevation view of a part of the saw of FIG. 1.
FIG. 3 is a left side elevation view of the saw of FIG. 1.
FIG. 4 is a side elevation of a gearbox assembly for use with the saw of FIG. 1.
FIG. 5 is a front elevation view of a gear assembly for use with the saw of FIG. 1 in a high-speed configuration.
FIG. 5A is a schematic representation of a gear shift pattern and a gear shift in a position for a high-speed configuration.
FIG. 6 is a front elevation view of a gear assembly for use with the saw of FIG. 1 in a neutral configuration.
FIG. 6A is a schematic representation of a gear shift pattern and a gear shift in a position for a neutral configuration.
FIG. 7 is a front elevation view of a gear assembly for use with the saw of FIG. 1 in a low speed configuration.
FIG. 7A is a schematic representation of a gear shift pattern and a gear shift in a position for the low speed configuration.
FIG. 8 is a front elevation view of a gear assembly for use with the saw of FIG. 1 in a neutral configuration.
FIG. 8A is a schematic representation of a gear shift pattern and a gear shift in a position for the neutral configuration.
FIG. 9 is a front elevation view of a gear assembly for use with the saw of FIG. 1 in a medium speed configuration.
FIG. 9A is a schematic representation of a gear shift pattern and a gear shift in a position for a medium speed configuration.

### DETAILED DESCRIPTION

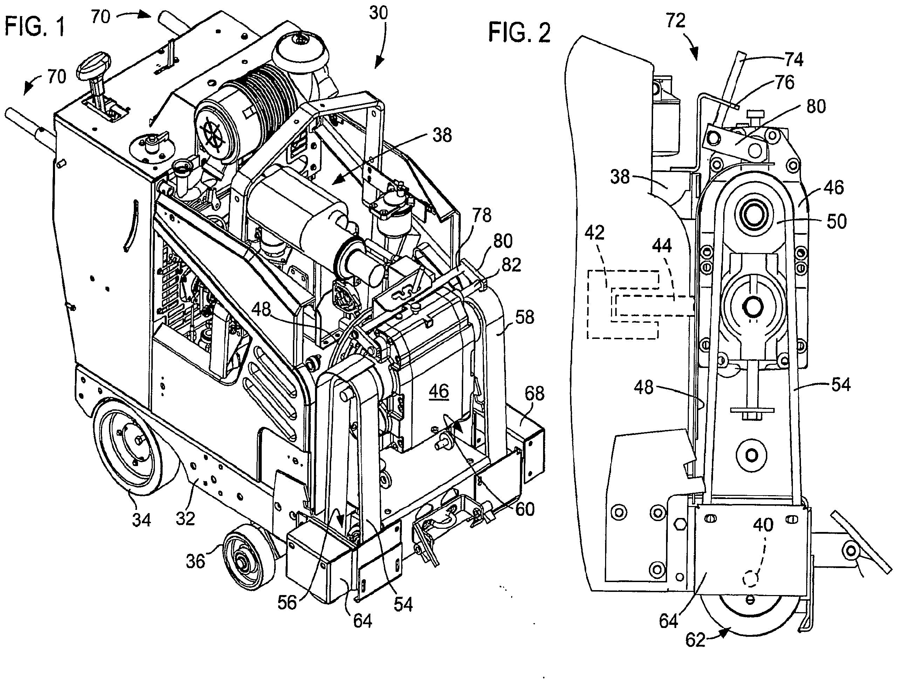

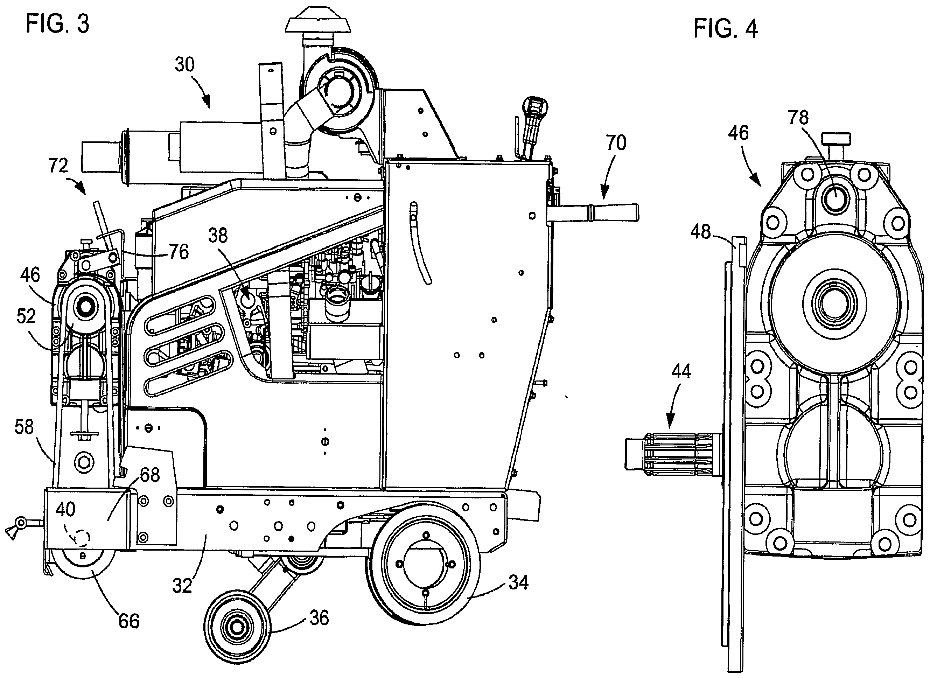

In one example of a saw (FIGS. 1-3), a concrete saw 30 includes a frame 32 supported by wheels 34 and 36. The wheels 34 and 36 allow the saw to move across a concrete surface for cutting. Details about exemplary constructions and configurations of a concrete saw, for example self-propelled saws, are provided in the above-identified patents. A motor such as an internal combustion engine 38 is supported on the frame 32 through vibration isolation components such as those described in the above-identified patents. The engine 38 may be used to drive a blade drive shaft 40 (FIGS. 2 and 3), which supports and drives a saw blade (not shown). The engine 38 may also be used to operate, through a transmission, the drive wheels 34 to propel the concrete saw. The engine 38 includes an engine output shaft 42 with an internally splined output element for engaging and driving an input shaft 44 to a drive element in the form of a gearbox 46 in this example through a cover plate 48. The gearbox 46 includes at least one, and in the example shown in the drawings, two gearbox output pulleys, a right output pulley 50 (FIG. 2) and a left output pulley 52 (FIG. 3). The right output pulley 50 drives a right belt 54, a single or multiple set of belts, around a right drive shaft pulley 56. The left output pulley 52 drives a left belt 58 (FIG. 3), also a single or multiple set of belts, around a left drive shaft pulley 60. The right and left drive shaft pulleys are directly connected to the blade drive shaft 40. A blade (not shown) can be mounted on the right side of the saw through right blade flanges 62 after removing a right blade flange cover 64 (FIG. 2). A blade (not shown) can be mounted on the left side of the saw through left blade flanges 66 after removing a left blade flange cover 68 (FIG. 3). Other blade shaft and blade shaft input configurations can also be used. For example, the blade shaft can be driven through a single drive belt or single set of drive belts.

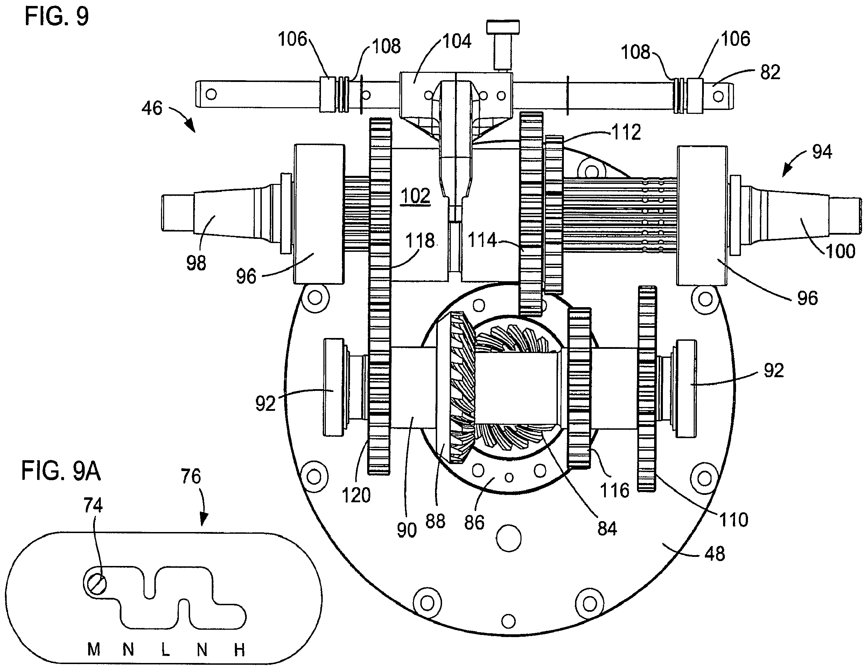

In the example shown in the drawings, the gearbox 46 is rigidly mounted to and supported on the engine by the cover plate 48. The cover plate 48 is bolted to a front of the engine, and the input shaft 44 to the gearbox engages the splined output element 42 in the engine. The splined output element may be a drive assembly which may, but need not, include a clutch or other means for disengaging the motor from the gearbox. One example of a suitable clutch arrangement is shown in FIG. 9 of US Patent No. 5,810,448. In other configurations for the gearbox, the gearbox can be separate from the cover plate and/or coupled to the engine output through other means. In the present example, the engine 38 is aligned and has its output shaft with the output element 42 aligned with the direction of travel of the saw. Therefore, the output shaft and output element 42 are directed parallel to the direction of travel, and perpendicular to the transverse orientation of the blade drive shaft 40. This engine orientation allows a larger engine to be placed on the saw within the same overall saw envelope compared to a saw having an engine oriented transverse to the direction of travel. Additionally, this orientation permits direct coupling of the gearbox 46 to the engine output at the front of the saw, so that the added volume occupied by the gearbox does not increase the width of the saw.

The gearbox 46 is mounted directly to the engine block, which in turn is supported on the frame through isolator elements (not shown). As a result, engine vibration and gearbox vibration that may occur during operation can be isolated or insulated from the frame, and therefore from the handles 70 at the rear of the saw (FIGS. 1 and 3). Additionally, mounting the gearbox directly to the engine allows the gearbox output to be applied to the blade drive shaft through belts or other flexible means, which helps to insulate the gearbox and other operating components from the loads and impacts experienced by the blade during cutting.

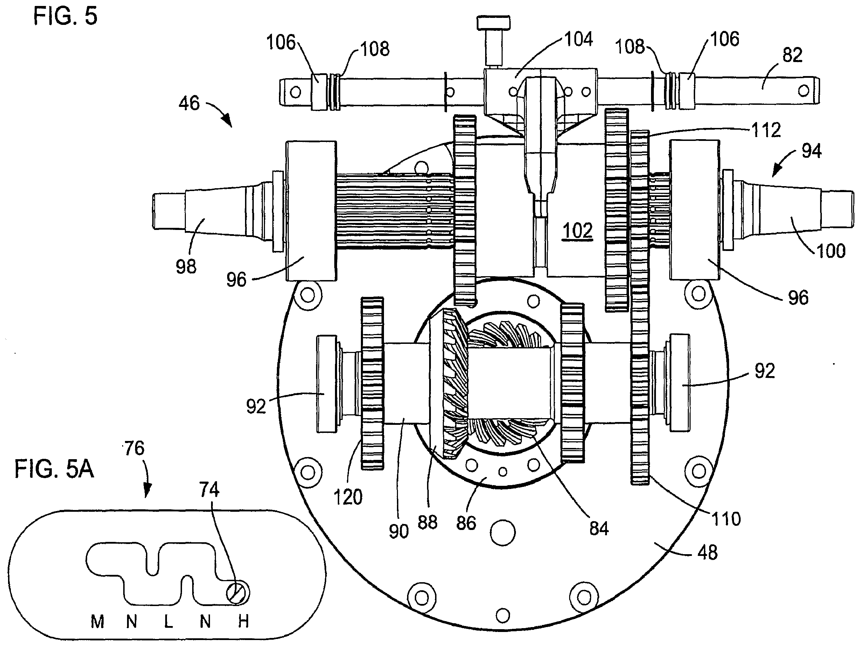

The gearbox in the example shown in the drawings includes a plurality of gear sets on a plurality of gear shafts (described more fully below) that can be used for driving the saw blade at different speeds for a given input rpm from the engine. The saw includes a speed selector 72 on the gearbox 46. In the example shown in drawings, the speed selector includes a handle 74 captured in a shift pattern 76, which is mounted to the engine. The shift pattern guides the operator in selecting the appropriate position for the handle 74 for the desired speed setting or neutral position. The shift pattern may also include appropriate indicators for the speed and neutral positions, such as "M" for medium speed, "N" for neutral, "L" for low, and "H" for high (as shown in FIGS. 5A-9A). Shift patterns other than that shown in FIG. 1 can also be used for the given gear arrangement described below. Additionally, other gear arrangements may dictate other shift pattern configurations.

The handle 74 is pivotally coupled to a transverse shift bar 78, which in turn is coupled through connector bars 80 to a gear selector shaft 82 extending through appropriate seals and bearings into the gearbox. The transverse shift bar 78 and the connector bars 80 transfer the handle movement to the gear selector shaft 82.

Considering the present example of the gearbox in more detail with respect to FIGS. 5-9, the gearbox includes a bevel drive gear 84 on or coupled to the input shaft 44 (FIG. 2). The bevel drive gear is supported by an appropriate bearing assembly (not shown) supported by a mounting plate 86. The bevel drive gear 84 engages and drives a bevel driven or follower gear 88 mounted on a lay shaft or drive shaft 90, to change the engine output by 90 degrees, to be parallel to the blade drive shaft. The drive shaft 90 is supported on radial bearing assemblies 92 in the gearbox housing. The drive shaft 90 turns a at least one gear, such as the gear 110, and in the example shown in the drawings the drive shaft 90 turns a plurality of gears, each of which are configured to engage a corresponding driven or output gear to produce the desired rpm on an output shaft.

Specifically, the gearbox 46 includes an externally splined output shaft 94 supported by a pair of radial bearings 96 in the gearbox housing. The splined shaft includes output shaft ends 98 and 100 for engaging and supporting the output shaft pulleys 50 and 52, respectively, shown in FIGS. 2 and 3. The pulleys drive the respective belts for driving the blade drive shaft. The pulleys may be keyed or otherwise engaged with the shaft ends. The shaft may also be sealed with appropriate seals where the shaft ends emerge from the gearbox housing.

The output shaft 94 also includes at least one driven or output gear for engaging the drive gear, and at least one or the other of the drive gear and the output gear have a configuration by which the gears disengage or otherwise have a neutral configuration, thereby disengaging the blade drive shaft from the motor. In the neutral position, the gear does not drive the blade support element. In one possible configuration, the drive gear changes to a neutral configuration by disengaging from the output gear, and in another configuration the output gear changes to a neutral configuration by disengaging from the input element. Other configurations are possible as well, including one where the gear can move from an engagement position about a splined shaft to a disengaged position about the shaft, for example past a point on the shaft where the splines terminate. The neutral position allows the motor to be on, or the saw moved with the motor on, but without the blade turning. The blade is disengaged from the motor.

In the example shown in the drawings, the output shaft 94 includes driven or output gears corresponding to the driving gears on the drive shaft 90, as described more fully below. The driven gears engage the splined shaft 94 and are axially fixed to a collar 102 and fixed relative to one another, so that movement of the collar 102 also moves axially the gears on the splined shaft 94 in unison. The collar 102 rotatably engages a gear selector fork 104 in such a way that the collar moves axially along the splined shaft when the gear selector fork moves axially. The collar 102 rotates with the splined shaft within a selector fork, which remains substantially rotationally fixed while the splined shaft rotates. The gears on the drive shaft and the output shaft are sized and arranged on their respective shafts in such a way that they have engaged positions and neutral positions.

The gear selector fork 104 is fixed to and supported on the gear selector shaft 82, and moves axially with the gear selector shaft. The gear selector shaft includes appropriate bearings 106 and seals 108 to reliably support the selector shaft in the gearbox housing. The handle 74 (FIGS. 1-3) moves the gear selector shaft, which in turn moves the output gear and collar assembly along the splined shaft 94 to select the appropriate speed setting or the neutral position.

As shown in FIG. 5, the drive shaft 90 includes a high-speed drive gear 110 rotationally fixed on but axially movable over the drive shaft for rotation with the shaft. When the gear selector shaft 82 is in the position shown in FIG. 5, according to the handle location represented in FIG. 5A, the high-speed drive gear 110 engages and drives a high-speed driven or output gear 112, and the other speed gears are disengaged. In the high-speed position, running the engine with the high-speed gears engaged turns the blade drive shaft at the highest rpm for the given configuration, for example where the engine operates at the highest reasonably rpm, which for some saws may be about 3000 rpm.

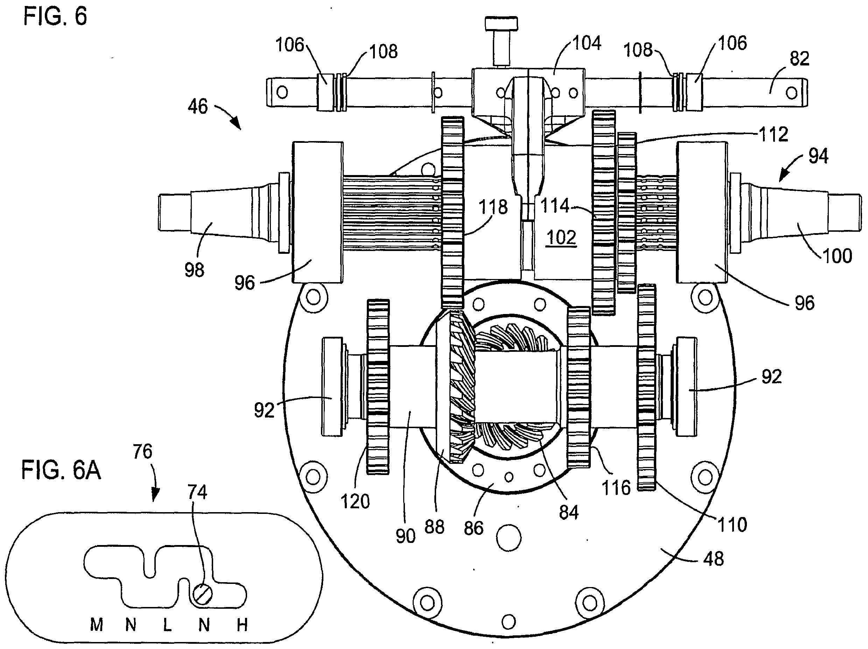

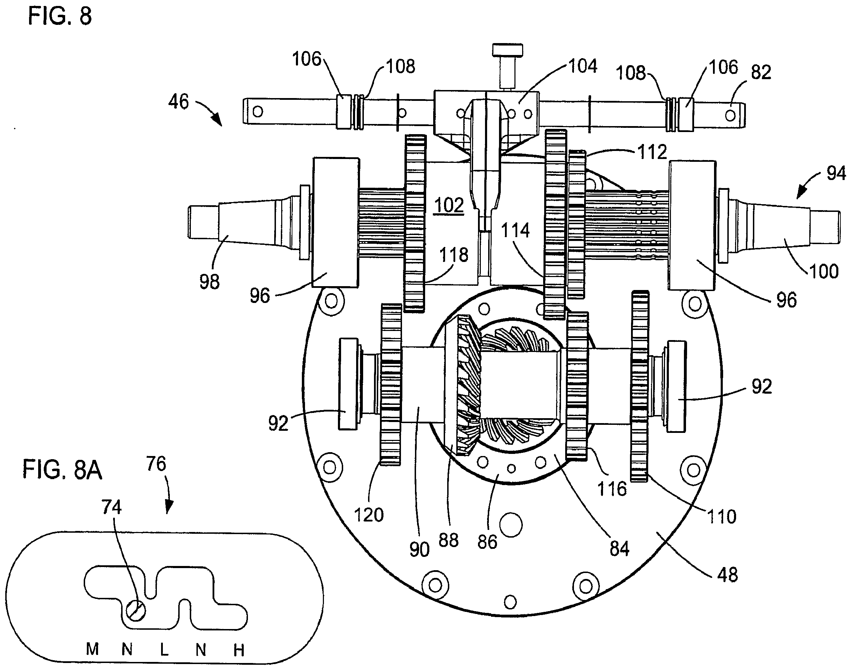

As shown in FIG. 6, the drive shaft 90 includes a neutral position where none of the drive gears on the drive shaft 90 engage any of the output gears on the splined shaft 94. When the gear selector shaft 82 is in the position shown in FIG. 6, according to the handle location represented in FIG. 6A, none of the drive gears engage any of the output gears. The axial positions of the drive gears relative to each other and the axial positions of the output gears relative to each other are such as to provide complete disengagement between the drive and driven gears. This neutral configuration, as well as the other neutral configuration discussed below with respect to FIGS. 8-8A, allows the operator to use the self-propelled mechanism on the saw driven by the motor to move the saw without having the blade turning. The neutral configuration also allows easier shifting from one gear to another, or one speed to another as the gear arrangements permit easier alignment of the gear pairs when shifting out of one speed and shifting into another speed. Shifting will typically occur with the engine off, for example for blade changes, when the engine is turned off to remove one size blade to be replaced by another size blade. The different sized blades may require different blade speeds, and therefore different gear settings in the gearbox. In the configuration shown in FIG. 6, the gear arrangement has the high-speed output gear 112 and the low speed output gear 114 positioned axially in the space between (the position after the high-speed output gear disengages from the high-speed drive gear and before the low speed output gear 114 engages the low speed drive gear 116) the high-speed drive gear 110 and the low speed drive gear 116. Additionally, the medium speed output gear 118 is next to the bevel follower gear 88 and spaced from the medium drive gear 120.

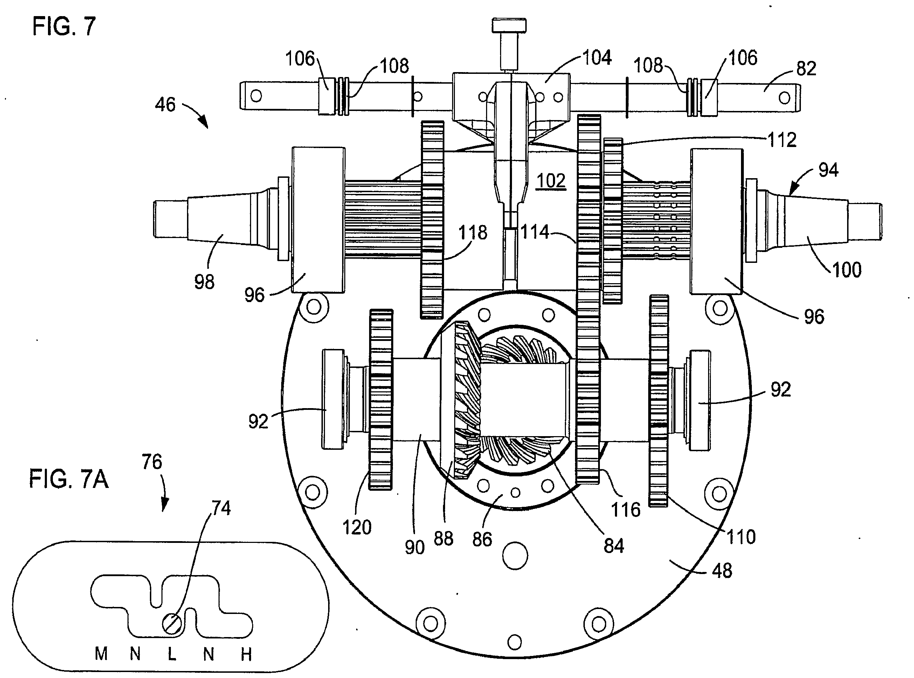

As shown in FIG. 7, the low speed output gear 116 engages the low speed output gear 118, and the other speed gears are disengaged. The low speed output gear 114 is rotationally fixed on but axially movable over the splined drive shaft 94 with the collar 102. When the gear selector shaft 82 is in the position shown in FIG. 7, according to the handle location represented in FIG. 7A, the low speed drive gear 116 engages and drives the low speed driven or output gear 114. In the low speed position, running the engine with the low speed gears engaged turns the blade drive shaft at the lowest rpm for the given configuration.

As shown in FIG. 8, the drive shaft 90 includes a second neutral position where none of the drive gears on the drive shaft 90 engage any of the output gears on the splined shaft 94. When the gear selector shaft 82 is in the position shown in FIG. 8, according to the handle location represented in FIG. 8A, none of the drive gears engage any of the output gears. The axial positions of the drive gears relative to each other and the axial positions of the output gears relative to each other are such as to provide complete disengagement between the drive and driven gears in the configuration shown in FIG. 8. In the configuration shown in FIG. 6, the gear arrangement has the high-speed output gear 112 aligned with but disengaged from the low speed drive gear 116, due to their respective diameters. The low speed output gear 114 is disengaged from the low speed drive gear 116 and is moved to be aligned with the space between the bevel follower gear 88 and below speed drive gear 116. Additionally, the medium speed output gear 118 is aligned with the space between the bevel follower gear 88 and the medium speed drive gear 120. Therefore, none of the speed gears are engaged.

As shown in FIG. 9, the medium speed output gear 118 is shifted into engagement with the medium speed drive gear 120, and the other speed gears are disengaged. The medium speed output gear 118 is rotationally fixed on but axially movable over the splined drive shaft 94 with the collar 102. When the gear selector shaft 82 is in the position shown in FIG. 9, according to the handle location represented in FIG. 9A, the medium speed drive gear 120 engages and drives the medium speed driven or output gear 118. In the medium speed position, running the engine with the medium speed gears engaged turns the blade drive shaft at an rpm intermediate the lowest and highest rpm for the given configuration.

While other gear configurations and combinations are possible, the configurations and combinations shown in the drawings provide to neutral positions, permitting easier shifting into and out of engagement, as well as allowing the operator to move the saw without the blade turning. The gearbox also conveniently has only two shafts also permitting a relatively small gearbox. The configurations also permit a relatively small sized gearbox. Additional blade speed ratios can be achieved by changing output or blade drive shaft pulleys.

Having thus described several exemplary implementations, it will be apparent that various alterations and modifications can be made without departing from the scope of the claims. Accordingly, the foregoing description is intended to be illustrative only.

## Claims

1. A concrete saw comprising:
a motor (38);
a blade support element (40) for supporting and driving a cutting blade; and
a plurality of gears (84, 88, 110, 112, 114, 116, 118, 120) between the motor (38) and the blade support element (40),
a flexible drive element (54, 58) between the plurality of gears (84, 88, 110, 112, 114, 116, 118, 120) and the blade support element (40), **characterised in that** the plurality of gears (84, 88, 110, 112, 114, 116, 118, 120) are arranged in a gearbox (46) having a drive input (44) and wherein the drive input (44) is at an approximate center widthwise of the gearbox (46), wherein the gears (84, 88, 110, 112, 114, 116, 118, 120) are arranged to include a neutral position (N) where the blade support element is not driven, and wherein the gears (84, 88, 110, 112, 114, 116, 118, 120) are configured to operate at at least two different speeds (M, L, H),
and wherein the gears further include a second neutral position.

2. The saw of claim 1, wherein the plurality of gears (84, 88, 110, 112, 114, 116, 118, 120) are configured to operate at three speeds (M, L, H).

3. The saw of claim 1, wherein the motor includes an output shaft (42), wherein the saw is configured to move in a first direction and wherein the output shaft (42) is parallel to the first direction.

4. The saw of claim 2, wherein the gears (84, 88, 110, 112, 114, 116, 118, 120) have a linear transition between a first speed and a second speed and between the second speed and a third speed and wherein the transitions are not in speed sequence.

5. The saw of claim 1, wherein the plurality of gears (84, 88, 110, 112, 114, 116, 118, 120) are arranged on two shafts (90, 94) between the motor (38) and the blade support element (40).

6. The saw of claim 1, wherein the motor (38) includes a motor output shaft (42), wherein the plurality of gears (84, 88, 110, 112, 114, 116, 118, 120) are arranged on at least one shaft (90, 94), and wherein the motor output shaft (42) has a gear (84) engaging a gear (88) on the at least one shaft (90, 94).

## Patentansprüche

1. Betonsäge, die Folgendes umfasst:
einen Motor (38);
ein Klingenstützelement (40) zum Stützen und
Antreiben einer Schneidklinge; und
mehrere Zahnräder (84, 88, 110, 112, 114, 116, 118, 120) zwischen dem Motor (38) und dem Klingenstützelement (40),
ein flexibles Antriebselement (54, 58) zwischen den mehreren Zahnrädern (84, 88, 110, 112, 114, 116, 118, 120) und dem Klingenstützelement (40), **dadurch gekennzeichnet, dass**
die mehreren Zahnräder (84, 88, 110, 112, 114, 116, 118, 120) in einem Getriebe (46) mit einem Antriebseingang (44) angeordnet sind und wobei sich der Antriebseingang (44) ungefähr in der Mitte der Breite des Getriebes (46) befindet,
wobei die Zahnräder (84, 88, 110, 112, 114, 116, 118, 120) dahingehend angeordnet sind, eine neutrale Stellung (N), in der das Klingenstützelement nicht angetrieben wird, zu umfassen, und wobei die Zahnräder (84, 88, 110, 112, 114, 116, 118, 120) dazu konfiguriert sind, mit mindestens zwei verschiedenen Drehzahlen (M, L, H) betrieben zu werden,
und wobei die Zahnräder ferner eine zweite neutrale Stellung umfassen.

2. Säge nach Anspruch 1, wobei die mehreren Zahnräder (84, 88, 110, 112, 114, 116, 118, 120) dazu konfiguriert sind, mit drei Drehzahlen (M, L, H) betrieben zu werden.

3. Säge nach Anspruch 1, wobei der Motor eine Ausgangswelle (42) umfasst, wobei die Säge dazu konfiguriert ist, sich in einer ersten Richtung zu bewegen, und wobei die Ausgangswelle (42) parallel zur ersten Richtung verläuft.

4. Säge nach Anspruch 2, wobei die Zahnräder (84, 88, 110, 112, 114, 116, 118, 120) einen linearen Übergang zwischen einer ersten Drehzahl und einer zweiten Drehzahl und zwischen der zweiten Drehzahl und einer dritten Drehzahl aufweisen und wobei die Übergänge keiner Drehzahlenabfolge folgen.

5. Säge nach Anspruch 1, wobei die mehreren Zahnräder (84, 88, 110, 112, 114, 116, 118, 120) auf zwei Wellen (90, 94) zwischen dem Motor (38) und dem Klingenstützelement (40) angeordnet sind.

6. Säge nach Anspruch 1, wobei der Motor (38) eine Motorausgangswelle (42) umfasst, wobei die mehreren Zahnräder (84, 88, 110, 112, 114, 116, 118, 120) auf mindestens einer Welle (90, 94) angeordnet sind und wobei die Motorausgangswelle (42) ein Zahnrad (84), das mit einem Zahnrad (88) auf der mindestens einen Welle (90, 94) in Eingriff gelangt, aufweist.

## Revendications

1. Scie à béton comprenant :
un moteur (38) ;
un élément de support de lame (40) destiné à supporter et à entraîner une lame de coupe ; et
une pluralité d'éléments d'engrenage (84, 88, 110, 112, 114, 116, 118, 120) entre le moteur (38) et l'élément de support de lame (40),
un élément d'entraînement souple (54, 58) entre la pluralité d'éléments d'engrenage (84, 88, 110, 112, 114, 116, 118, 120) et l'élément de support de lame (40),
**caractérisée en ce que**
la pluralité d'éléments d'engrenage (84, 88, 110, 112, 114, 116, 118, 120) sont disposés dans une boîte d'engrenage (46) comportant une entrée d'entraînement (44) et l'entrée d'entraînement (44) se trouvant au niveau d'un centre approximatif, dans le sens de la largeur, de la boîte d'engrenage (46),
les éléments d'engrenage (84, 88, 110, 112, 114, 116, 118, 120) étant conçus pour comprendre une position neutre (N), dans laquelle l'élément de support de lame n'est pas entraîné, et les éléments d'engrenage (84, 88, 110, 112, 114, 116, 118, 120) étant configurés pour fonctionner à au moins deux vitesses différentes (M, L, H),
et les éléments d'engrenage comprenant en outre une seconde position neutre.

2. Scie selon la revendication 1, dans laquelle la pluralité d'éléments d'engrenage (84, 88, 110, 112, 114, 116, 118, 120) sont configurés pour fonctionner à trois vitesses (M, L, H).

3. Scie selon la revendication 1, dans laquelle le moteur comprend un arbre de sortie (42), la scie étant configurée pour se déplacer dans une première direction et dans laquelle l'arbre de sortie (42) est parallèle à la première direction.

4. Scie selon la revendication 2, dans laquelle les éléments d'engrenage (84, 88, 110, 112, 114, 116, 118, 120) présentent une transition linéaire entre une première vitesse et une deuxième vitesse et entre la deuxième vitesse et une troisième vitesse et dans laquelle les transitions ne se trouvent pas dans un ordre de vitesse.

5. Scie selon la revendication 1, dans laquelle la pluralité d'éléments d'engrenage (84, 88, 110, 112, 114, 116, 118, 120) sont disposés sur deux arbres (90, 94) entre le moteur (38) et l'élément de support de lame (40).

6. Scie selon la revendication 1, dans laquelle le moteur (38) comprend un arbre de sortie de moteur (42), dans laquelle la pluralité d'éléments d'engrenage (84, 88, 110, 112, 114, 116, 118, 120) sont disposés sur au moins un arbre (90, 94), et dans laquelle l'arbre de sortie de moteur (42) comporte un élément d'engrenage (84) s'engrenant avec un élément d'engrenage (88) sur l'arbre ou les arbres (90, 94).
